# FASCICULE DE BREVET EUROPEEN

(11) **EP 2 788 203 B1**
(45) Date de publication et mention de la délivrance du brevet: **13.09.2017**
(21) Numéro de dépôt: 12799105.7
(22) Date de dépôt: 27.11.2012
(51) Int. Cl.: B60C 11/03

(54) **DISPOSITIF REDUCTEUR DE BRUIT AMELIORE POUR PNEU**
IMPROVED NOISE REDUCTION DEVICE FOR TIRE
VERBESSERTE VORRICHTUNG ZUR LÄRMREDUZIERUNG EINES REIFENS

(30) Priorité: 05.12.2011 FR 1161164
(43) Date de publication de la demande: 15.10.2014
(73) Titulaire: Compagnie Générale des Etablissements Michelin, 63000 Clermont-Ferrand (FR)
(72) Inventeur: ROTY, Gael, Otha-Shi Gunma 373-8668 (JP); MAES, Laurent, F-63040 Clermont-Ferrand Cedex 9 (FR)
(74) Mandataire: Regimbeau
(86) Numéro de dépôt international: PCT/EP2012/073669
(87) Numéro de publication internationale: WO 2013/083428

(56) Documents cités:
- EP-A1- 1 946 943
- JP-A- 3 276 802
- JP-A- 4 221 207
- JP-A- 5 155 203
- JP-A- 8 150 812
- JP-A- 60 116 510
- JP-A- 60 121 103

## Description

### DOMAINE DE L'INVENTION

La présente invention concerne les bandes de roulement de pneu et plus particulièrement les bandes de roulement comprenant des rainures comportant des dispositifs flexibles formant des dispositifs réducteurs du bruit généré par la mise en résonance de l'air à l'intérieur de ces rainures lors du roulage.

### ÉTAT DE LA TECHNIQUE

Il est connu que le passage dans le contact d'un pneu en roulage sur une chaussée génère une circulation d'air dans une sorte de tuyau formé par une partie de rainure notamment mais pas exclusivement une rainure d'orientation générale circonférentielle et la chaussée elle-même, ce tuyau étant ouvert à ses deux extrémités.

Dans ce tuyau, il se forme; dans le contact avec la chaussée, une colonne d'air qui entre en vibration et dont la fréquence de résonance dépend de la longueur entre les deux extrémités du tuyau et en conséquence de la longueur de rainure dans le contact avec la chaussée.

Cette résonance de l'air dans les rainures a comme conséquence de générer, dans un véhicule équipé avec ces pneus, un bruit perceptible à l'intérieur et à l'extérieur du véhicule.

Ces bruits intérieur et extérieur correspondent le plus souvent à une fréquence voisine de ou égale à 1 kHz qui est une fréquence particulièrement sensible à l'oreille humaine. Afin de réduire un tel bruit de résonance, il est connu de disposer, dans chaque rainure d'orientation circonférentielle ou globalement circonférentielle, une pluralité de membranes ou lames de fermeture relativement peu épaisses en matériau caoutchoutique, chaque membrane ou lame de fermeture occupant toute la section de la rainure ou à tout le moins une grande partie de cette section. Chaque membrane de fermeture peut s'étendre à partir du fond de la rainure ou être fixée à l'une au moins des parois délimitant ladite rainure.

Grâce à ces membranes flexibles de fermeture, la longueur de la colonne d'air dans chaque rainure circonférentielle est réduite par rapport à la longueur totale de la rainure dans le contact, ce qui conduit à une modification de la fréquence de résonance. Ce changement de fréquence se fait vers des valeurs de fréquences de résonance moins sensibles à l'oreille humaine. Le nombre de membranes flexibles pour former un dispositif réducteur de bruit de roulage doit être déterminé pour que les longueurs de rainures pouvant entrer en résonance dans le contact avec la chaussée soient appropriées pour délivrer des résonnances moins perceptible à l'oreille.

Par relativement peu épaisse, on entend que chaque membrane ou lame flexible de fermeture n'est apte à ne fléchir que sous des conditions appropriées atteintes lors d'un roulage sur chaussée revêtue d'eau, notamment par temps de pluie. En effet, pour conserver une fonction de drainage de l'eau entre la chaussée et le pneu, il est nécessaire que cette membrane fléchisse sous l'action de la pression de l'eau pour ouvrir la section de la rainure à l'écoulement de l'eau.

Il a été proposé plusieurs solutions de ce type pour réduire la résonance de la colonne d'air en vibration dans les rainures comme par exemple dans le document de brevet FR2715891.

Dans le cas de dispositifs réducteurs de bruit formés d'au moins une lame flexible, chaque lame flexible étant reliée au fond d'une rainure, on observe une bonne efficacité du dispositif à l'état neuf. Cette efficacité est toutefois diminuée après usure partielle de la bande de roulement comportant des rainures ayant de tels dispositifs. Une raison en est l'augmentation de la rigidité de flexion de chaque lame après usure partielle.

Le document JP 8 150812A décrit un pneumatique selon le préambule de la revendication 1 pourvu dans une rainure principale d'une partie de fermeture de rainure s'étendant dans une direction de manière à interrompre la rainure principale, la rainure principale ayant une section de déformation de la rainure où une aire de section de la rainure principale est augmentée ou diminuée entre les parties de fermeture de rainure.

Un objectif de l'invention est d'améliorer l'efficacité de tels dispositifs réducteurs de bruit avec l'usure de la bande.

### Définitions :

La surface de roulement d'une bande de roulement correspond à la surface de la bande venant en contact avec un sol lors du roulage d'un pneu pourvu d'une telle bande.

Une rainure correspond à un espace formé dans une bande de roulement, cet espace étant délimité par des parois de matière d'éléments de relief (blocs, nervures), ces parois étant réunies par un fond de rainure distant de la surface de roulement de la bande d'une distance maximale égale à la profondeur de la rainure. Le fond de rainure correspond à la partie de la rainure qui est située radialement à l'intérieur d'une limite d'usure légale à partir de laquelle la bande de roulement ne satisfait plus aux exigences légales d'utilisation. En général, on dispose d'une pluralité d'indicateurs de limite d'usure dans une ou des rainures. La partie radialement externe de ces indicateurs correspond à la transition entre les parois d'une rainure et le fond de ladite rainure.

Un bloc est un élément en relief formé sur une bande de roulement, cet élément étant délimité par des creux ou rainures et comprenant des parois latérales et une face de contact, cette dernière - destinée à venir en contact avec la chaussée pendant le roulage, faisant partie de la surface de roulement de la bande.

Une nervure est un élément en relief formé sur une bande de roulement, cet élément étant délimité par deux rainures. Une nervure comprend deux parois latérales et une face de contact, cette dernière étant destinée à venir en contact avec la chaussée.

Par direction radiale, on entend une direction qui est perpendiculaire à l'axe de rotation du pneu (cette direction correspond à la direction de l'épaisseur de la bande de roulement).

Par direction axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

### BREF EXPOSÉ DE L'INVENTION

La présente invention vise à obtenir un dispositif réducteur de bruit de résonnance des rainures d'une bande de roulement, ce dispositif comprenant au moins une lame flexible fixée sur le fond d'une rainure et dont l'efficacité en réduction de bruit de résonance et en drainage de liquide est conservée tout au long de l'usage de la bande pourvue d'un tel dispositif et notamment après une usure au moins égale à 50% de la profondeur des rainures.

Il est à noter que la mise en oeuvre de ce dispositif peut intéresser tout type de rainure, que cette rainure soit d'orientation circonférentielle, transversale ou oblique.

À cet effet, l'invention a pour objet une bande de roulement pour pneu, cette bande de roulement ayant une surface de roulement destinée à venir en contact avec une chaussée et comprenant au moins une rainure de largeur W et de profondeur P délimitée par deux parois se faisant face, ces parois étant reliées entre elles par un fond de rainure, ce fond de rainure correspondant à la partie de la rainure reliant les parois et situé radialement au-dessous de l'usure limite légale,

au moins une rainure comportant au moins un dispositif de fermeture au moins partielle de la section de cette rainure lors de son passage dans le contact avec une chaussée, chaque dispositif de fermeture comprenant au moins une lame d'épaisseur appropriée pour permettre sa flexion sous l'effet d'une circulation d'eau lors d'un roulage sur une chaussée revêtue d'eau, cette au moins une lame flexible étant fixée au fond de la rainure,

chaque lame flexible d'épaisseur moyenne E étant limitée par une paroi de contact destinée à venir en contact avec la chaussée lors du roulage, par des parois d'extrémités faisant face chacune à une des parois délimitant la rainure et des parois latérales espacées l'une de l'autre d'une distance égale à l'épaisseur moyenne E de la lame.

Cette bande de roulement est caractérisée en ce qu'il est formé au moins un passage entre le fond de la rainure et chaque lame du dispositif de fermeture, ce passage étant destiné à assurer un écoulement déterminé d'eau dans la rainure lors d'un roulage sur chaussée revêtue d'eau, cet écoulement déterminé se faisant sans nécessiter la flexion de chaque lame et cela quel que soit le niveau d'usure de la bande.

Dans le cadre de cette invention, le terme "passage" se comprend comme un espace limité en partie par le fond de la rainure et en partie par une paroi de la lame flexible.

Si on note L1 la longueur de la paroi de contact d'une lame flexible à l'état neuf, et L2 la longueur de liaison de cette même lame avec le fond de la rainure, alors on définit une longueur Lp du passage formé entre cette lame et le fond de la rainure comme étant égale à la différence (L1-L2). Cette longueur Lp du passage est au moins égale à 30% de L1 et au plus égale à 70% de L1. De préférence la hauteur maximale Hp du passage est au moins égale à la hauteur de la limite légale d'usure de la bande.

Le passage formé sur chaque lame flexible peut prendre toute géométrie. La partie de la lame flexible délimitant ce passage peut suivre un profil rectiligne, circulaire ou toute autre géométrie appropriée. Le raccordement de cette partie de la lame flexible avec le fond de la rainure peut être aménagé de manière à limiter les concentrations de contraintes en prévoyant notamment des parties de rayons de courbure appropriés.

Dans une variante de l'invention, le dispositif de fermeture est formé d'une lame flexible unique fermant quasiment en totalité la section d'une rainure et comprenant au moins un passage entre le fond de la rainure et elle-même.

Dans une variante, cette lame unique comprend un passage de part et d'autre de sa longueur de liaison L2 avec le fond de la rainure.

Dans une autre variante de l'invention, le dispositif de fermeture est formé par au moins deux lames flexibles, ces lames flexibles étant disposées soit bout à bout de façon à se toucher par l'une de leurs parois d'extrémité soit de manière décalée l'une par rapport à l'autre dans la direction principale de la rainure (cette direction correspondant à la direction d'un écoulement de liquide dans la rainure).

Dans cette variante, chaque lame flexible comprend un passage et ces deux passages peuvent être complémentaires l'un de l'autre pour former un orifice unique traversant le dispositif anti bruit formé de deux lames flexibles.

Chaque passage a une hauteur au moins égale à la hauteur de l'indicateur de limite d'usure.

La surface totale de l'ouverture formée par les passages est au plus égale à 30% de la surface de la section de la rainure à l'état neuf dans laquelle est formé le dispositif de fermeture. Cette même surface totale de l'ouverture est au moins égale à 30% de la surface de la section de la rainure lorsque cette rainure est limitée à une hauteur de 1.6 mm correspondant à la hauteur de l'usure limite de la bande de roulement pour des pneus de véhicules tourisme à la date de l'invention.

Grâce à l'invention, la rigidité de flexion de chaque lame, quand bien même elle augmente progressivement avec l'usure puisque sa hauteur diminue, reste toutefois appropriée pour permettre une circulation minimale de liquide lors d'un roulage par temps de pluie et cela quel que soit le niveau d'usure de la bande.

À noter qu'après une usure supérieure à 50% de la hauteur de la bande de roulement, le problème de bruit lié à la résonance dans les rainures est sensiblement atténué et ne requiert donc plus de dispositif anti bruit.

Pour tenir compte de la réduction de la surface de liaison de chaque lame avec le fond de rainure, cette réduction étant la conséquence de la présence d'au moins un passage entre cette lame et le fond de la rainure, il est avantageux d'augmenter au moins localement cette surface de section de manière à favoriser le moulage de ladite lame. Cet agrandissement de surface localisé génère par ailleurs un renforcement de la liaison de chaque lame avec le fond de la rainure dans laquelle ladite lame est moulée, ce qui est favorable d'un point de vue de la résistance des lames aux cycles de flexions.

D'autres caractéristiques et avantages de l'invention ressortent de la description faite ci-après en référence aux dessins annexés qui montrent, à titre d'exemples non limitatifs, des variantes de réalisation de l'objet de l'invention.

### BRÈVE DESCRIPTION DES FIGURES

La figure 1 montre une variante d'un dispositif de fermeture comprenant deux lames flexibles selon l'invention, ces lames étant disposées l'une en face de l'autre ;
La figure 2 montre une vue en plan de la variante de dispositif montrée avec la figure 1 ;
La figure 3 montre une autre variante d'un dispositif de fermeture comprenant deux lames flexibles selon l'invention, ces lames décalées l'une par rapport à l'autre ;
La figure 4 montre vue en plan de la variante de dispositif montrée avec la figure 3 ;
La figure 5 montre une variante qui n'est pas selon l'invention telle que revendiquée selon laquelle la surface de section d'une lame est constante sur toute sa hauteur ;
La figure 6 montre une coupe selon la ligne VI-VI prise sur la figure 5 ;
La figure 7 montre une autre variante d'un dispositif de fermeture comprenant une lame unique selon l'invention.

### DESCRIPTION DES FIGURES

Pour les figures accompagnant cette description, des mêmes signes de référence peuvent être employés pour décrire des variantes de l'invention dès lors que ces signes de référence renvoient à des éléments d'une même nature, que cette nature soit structurelle ou bien fonctionnelle.

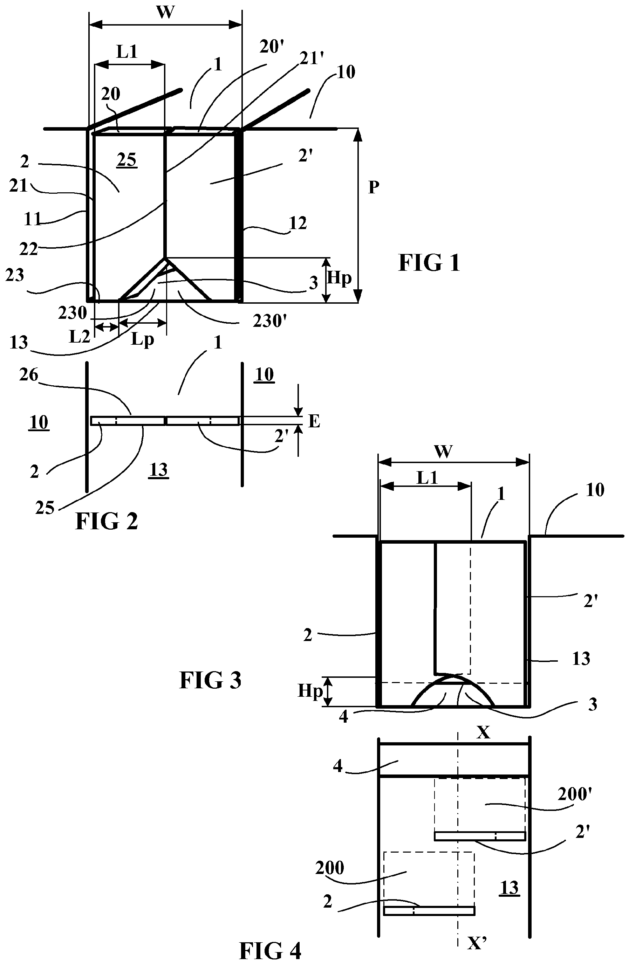

La figure 1 montre une variante d'un dispositif de fermeture comprenant deux lames flexibles selon l'invention, ces lames étant disposées l'une en face de l'autre.

La figure 1 montre, en coupe, une vue partielle d'une rainure d'une bande de roulement selon l'invention équipant un pneu de dimension **225 / 55 R 17.** On a représenté sur cette figure 1 une rainure 1 limitée par deux éléments de relief de la bande, cette rainure 1 s'étendant sensiblement dans une direction circonférentielle du pneu pourvue de ladite bande. Cette rainure 1, de largeur W - mesurée sur la surface de roulement 10 à l'état neuf, égale à 13 mm et de profondeur P égale à 7.5 mm, est limitée par une première paroi latérale 11 et une seconde paroi latérale 12, ces parois latérales se faisant face et un fond de rainure 13 reliant entre elles ces deux parois latérales. La bande de roulement comprend une surface de roulement 10 destinée à venir en contact avec une chaussée pendant le roulage. Dans ce qui suit, le fond de la rainure 13 correspond à la partie de la rainure 1 qui est conservée après usure de la bande jusqu'à la limite légale fixée par les règlements nationaux et généralement indiquée par des indicateurs de limite d'usure.

Cette rainure 1 comprend un dispositif anti bruit formé par une pluralité d'obstacles flexibles moulés dans ladite rainure. Chaque obstacle comprend deux lames 2, 2' occupant chacune la moitié de la section de la rainure 1, ces lames 2, 2' se trouvant dans le prolongement l'une de l'autre de manière à avoir chacune une paroi d'extrémité en contact avec une paroi d'extrémité de l'autre lame. Chaque lame 2, 2' fait saillie sur le fond 13 de la rainure 1.

Chaque lame flexible 2, 2' a une épaisseur appropriée (dans le cas présent égale à 0.6 mm) afin de pouvoir aisément fléchir autour d'un axe suivant sensiblement la liaison de chaque lame 2, 2' avec le fond 13 de la rainure dans le but de laisser s'écouler l'eau dans la rainure 1 lors d'un roulage par temps de pluie tout en faisant obstacle à la circulation de l'air en roulage sur chaussée sèche (dans les conditions de roulage sur chaussée sèche la pression de l'air est insuffisante pour faire fléchir ces lames).

La première lame 2 est limitée par deux parois d'extrémité 21, 22 faisant face l'une à la paroi 11 délimitant la rainure 1 et l'autre à une paroi d'extrémité 21' de la deuxième lame flexible 2' et une paroi de contact 20 destinée à venir en contact avec la chaussée et des parois latérales 25, 26 (visibles sur la figure 2) espacées d'une distance égale à l'épaisseur E de la lame 2. Cette première lame 2 est reliée au fond 13 de la rainure par une paroi 23. Entre la première lame 2 et le fond 13 de rainure est formé un passage 230 de forme triangulaire de hauteur maximale Hp sensiblement égale à la limite d'usure de la bande.

Chaque lame 2, 2' a une largeur L1 égale à 6 mm, cette largeur L1 étant mesurée dans la direction de la largeur W de la rainure 1 sur la paroi de contact de la lame à l'état neuf (c'est-à-dire avant tout roulage). La longueur de liaison de la lame 2 avec le fond de rainure est notée L2 ; cette longueur L2 est égale dans le cas présent à environ 50% de la longueur L1.

En combinaison avec cette première lame 2, il est formé une seconde lame 2' de même géométrie, cette seconde lame étant elle aussi liée au fond de la rainure par une longueur égale à la longueur L2. Cette lame a elle aussi une paroi de contact 20' qui comme la paroi de contact 20 de la première lame est en léger décalage par rapport à la surface de roulement 10 de la bande de roulement à l'état neuf. Entre cette deuxième lame 2' et le fond de la rainure est formé un autre passage triangulaire 230'.

Dans le cas présenté, la première lame 2 et la seconde lame 2' sont formées de manière à avoir chacune une partie d'extrémité 22, 21' placées en vis-à-vis l'une de l'autre après le moulage de la bande et de façon à être en contact ou quasiment en contact.

Dans cette variante, la combinaison des deux lames 2, 2' génère la formation d'un orifice 3 dont la surface de section est sensiblement égale à la somme des surfaces de section de chaque passage 230, 230'.

Sur la figure 2 montrant une vue en plan d'une partie de la rainure 1 de la figure 1, on voit que les deux lames 2, 2' de même épaisseur E sont placées bout à bout de manière à fermer quasiment en totalité la largeur W de la rainure. Seul des jeux appropriés sont préservés entre les lames flexibles et les parois délimitant la rainure.

Avec la figure 3, on montre une autre variante d'un dispositif de fermeture selon l'invention, ce dispositif comprenant deux lames flexibles 2, 2', ces lames étant décalées l'une par rapport à l'autre dans la direction principale de la rainure 1 ; elles sont en outre légèrement en retrait par rapport à la surface de roulement 10 à l'état neuf. La direction principale de la rainure correspondant à la direction de la plus grande dimension de ladite rainure selon laquelle s'effectue l'écoulement de l'eau lors d'un roulage sur chaussée revêtue d'eau. On a représenté un indicateur d'usure 4 comme une protubérance moulée sur le fond 13 de la rainure. On voit que la hauteur Hp de l'orifice 3 formé est supérieure à la hauteur de l'indicateur d'usure 4.

Chaque lame est semblable aux lames du dispositif décrit avec le support de la figure 1, les seules différences résidant dans la disposition desdites lames l'une par rapport à l'autre et dans la longueur L1 de chaque lame. Chaque lame a en effet une longueur L1 de sa paroi de contact à l'état neuf qui est supérieure à la moitié de la largeur W de la rainure. Dans cette variante, l'orifice 3 formé est limité par des parois de contour curviligne.

Sur la figure 4 montrant une vue en plan d'une partie de cette rainure 1 montrée avec la figure 3, on voit les deux lames 2 et 2' en décalage l'une par rapport à l'autre dans la direction principale XX' de la rainure. On distingue l'indicateur d'usure limite 4 formé par moulage sur le fond 13 de la rainure afin d'indiquer à l'usager la limite d'usure de la bande de roulement. Comme cela est montré ici, la hauteur maximale de l'orifice 3 est prévue pour être supérieure à la hauteur de l'indicateur 4 mesuré à partir du fond 13 de la rainure. Ainsi même quand l'usure de la bande de roulement s'approche de la limite les lames sont également usées et présentent en conséquence des rigidités de flexion augmentées par rapport à leur rigidité à l'état neuf. La présence d'un orifice 3 ayant une hauteur maximale Hp supérieure à la hauteur de l'indicateur d'usure 4 est un moyen de permettre un écoulement de liquide dans la rainure même quand les lames fléchissent moins facilement. Sur cette même figure 4, on voit la position prise par chacune des lames 2 et 2' après flexion lors d'un écoulement d'eau dans la rainure (tracés en pointillés référencés 200 et 200').

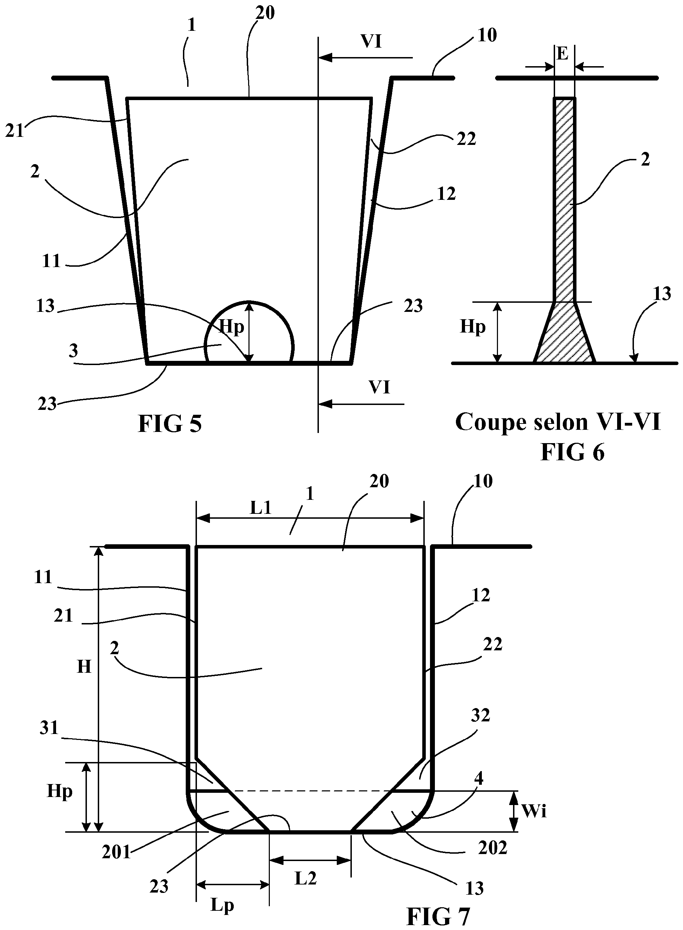

La figure 5 montre une variante qui n'est pas selon l'invention telle que revendiquée selon laquelle la section d'une rainure 1 est fermée par un dispositif anti bruit comprenant une seule lame 2. La rainure 1 est délimité par des parois latérales 11, 12 elles-mêmes reliées par un fond 13. Les parois latérales forment entre elles un angle faible mais non nul. La lame 2 présente une paroi de contact 20 et des parois d'extrémité 21, 22 suivant sensiblement les parois latérales tout en réservant un jeu suffisant pour permettre une flexion de la lame sous l'action d'une pression hydraulique lors d'un roulage sur chaussée revêtue d'eau. Cette lame 2 en léger décalage par rapport à la surface de roulement 10 à l'état initial est reliée au fond 13 par une paroi de liaison 23 comprenant deux parties disjointes séparées l'une de l'autre par un passage 3 de forme semi circulaire.

En outre et comme on le voit sur la figure 6 montrant une coupe selon la ligne VI-VI prise sur la figure 5, la lame 2 n'a une épaisseur constante qu'entre la paroi de contact à l'état initial et un niveau correspondant à la hauteur maximale Hp du passage 3 formé avec le fond de la rainure. En effet, la surface de section de la lame 2 est constante sur toute sa hauteur et pour obtenir ce résultat il est nécessaire de faire varier l'épaisseur de la lame dans la partie délimitant le passage 3 de sorte que la surface de section de la lame mesurée au niveau du fond 13 de la rainure soit égale à toute autre surface de section prise à n'importe quel autre niveau sur cette lame. De cette manière, on génère une augmentation de l'épaisseur au niveau de la liaison avec le fond 13 de la rainure, cette épaisseur diminuant ensuite progressivement jusqu'à la hauteur maximale Hp du passage formé entre la lame et le fond 13.

De façon avantageuse, l'augmentation d'épaisseur est approprié pour que la surface de section de la lame soit constante ou quasiment constante quel que soit le niveau considéré dans la hauteur de la lame. Grâce à cette caractéristique, il est ainsi plus aisé de remplir de façon satisfaisante les cavités d'un moule servant au moulage de ce type de lame avec le matériau caoutchoutique composant la bande de roulement.

Dans la variante selon l'invention montrée avec la figure 7, un dispositif de fermeture comprend une lame unique avec deux orifices créés 31, 32.

Le dispositif anti bruit de résonance dans la rainure 1 est formé par une seule lame 2 fermant transversalement la section de cette rainure 1. Cette lame comprend une paroi de contact 20 de longueur L1 à l'état neuf, cette paroi de contact 20 étant destinée à venir en contact avec la chaussée et deux parois d'extrémité 21, 22 faisant face aux deux parois 11, 12 délimitant la rainure 1. Cette lame 2 est reliée au fond 13 de la rainure par une paroi 23 ayant une longueur L2. De part et d'autre de cette liaison entre la lame flexible 2 et le fond 13 de la rainure sont formés deux passages 201, 202 de mêmes dimensions. Chaque passage a une longueur Lp représentant 25 % de la longueur L1 maximale de la lame et une hauteur Hp égale à 20% de la hauteur H de la lame flexible mesurée à l'état neuf. Dans le cas présent, la hauteur Hp de chaque passage 201, 202 est légèrement supérieure à la hauteur Wi de l'indicateur de limite d'usure 4.

Dans le cas montré, la surface totale de l'ouverture formée par les passages 201, 202 est au égale à 20% de la surface totale de la section de la rainure à l'état neuf dans laquelle est formé le dispositif de fermeture. Cette même surface totale de l'ouverture est ici égale à 50% de la surface de la section de la rainure limitée à une hauteur Wi égale à 1.6 mm et correspondant à la hauteur de l'usure limite de la bande de roulement.

L'invention ayant été décrite de manière générale et au moyen de quelques variantes, il doit être compris que cette invention n'est pas limitée aux seules variantes décrites et représentées. Les diverses variantes décrites ici peuvent être combinées entre elles par la personne du métier en fonction de l'objectif poursuivi, notamment en employant dans un même pneu les différents dispositifs décrits.

Toutes les variantes décrites précédemment - à l'exception de la variante de la figure 7 - montrent des lames dont la paroi de contact était en léger décalage vers l'intérieur par rapport à la surface de roulement à l'état neuf, mais il est tout à fait possible de les prévoir comme étant au même niveau voire en léger décalage vers l'extérieur de la même surface de roulement. Les dispositifs anti bruit présentés peuvent être employés dans des rainures d'orientation circonférentielle ou oblique c'est-à-dire faisant un angle non nul avec la direction générale circonférentielle.

## Revendications

1. Bande de roulement pour pneu, cette bande de roulement ayant une surface de roulement (10) destinée à venir en contact avec une chaussée et comprenant au moins une rainure (1) de largeur W et de profondeur P délimitée par deux parois (11, 12) se faisant face, ces parois étant reliées entre elles par un fond de rainure (13), ce fond de rainure correspondant à la partie de la rainure reliant les parois (11, 12) et situé radialement au-dessous de l'usure limite légale, au moins une rainure (1) comportant au moins un dispositif de fermeture pour fermer au moins partiellement cette rainure lors de son passage dans le contact avec une chaussée, chaque dispositif de fermeture comprenant au moins une lame flexible (2, 2') d'épaisseur appropriée pour permettre sa flexion sous l'effet d'une circulation de liquide, chaque lame flexible d'épaisseur E étant limitée par une paroi de contact (20) destinée à venir en contact avec la chaussée et par des parois d'extrémités (21, 22) faisant face chacune à une paroi délimitant la rainure et des parois latérales (25) espacées l'une de l'autre d'une distance égale à l'épaisseur E de la lame, cette bande de roulement étant **caractérisée en ce que** chaque lame est uniquement fixée sur le fond de la rainure et **en ce qu'**il est formé au moins un passage (230, 230' ; 3 ; 201, 202) entre le fond (13) de la rainure et chaque lame du dispositif, ce passage (230, 230' ; 3 ; 201, 202) étant destiné à assurer un écoulement minimal d'eau lors d'un roulage sur chaussée revêtue d'eau et cela quel que soit le niveau d'usure de la bande.

2. Bande de roulement selon la revendication 1 **caractérisée en ce que** le passage (230, 230' ; 3 ; 201, 202) formé entre le fond (13) de la rainure et une lame flexible du dispositif de fermeture a une longueur Lp mesurée dans la direction de la largeur de la section de la rainure (1), cette longueur Lp étant au moins égale à 30% et au plus égale à 70% de la longueur L1 de la paroi de contact (20) de la lame à l'état neuf.

3. Bande de roulement selon la revendication 1 ou la revendication 2 **caractérisée en ce que** chaque dispositif de fermeture comprend une lame unique (2) pourvue d'un passage (201, 202) de part et d'autre de sa longueur de liaison avec le fond de la rainure.

4. Bande de roulement selon la revendication 1 ou la revendication 2 **caractérisée en ce que** le dispositif de fermeture est formé par au moins deux lames flexibles (2, 2'), ces lames flexibles étant disposées bout à bout de façon à se toucher par l'une de leurs parois d'extrémité.

5. Bande de roulement selon la revendication 1 ou la revendication 2 **caractérisée en ce que** le dispositif de fermeture est formé par au moins deux lames flexibles (2, 2'), ces lames flexibles étant disposées de manière décalée l'une par rapport à l'autre dans la direction principale de la rainure, cette direction correspondant à la direction d'un écoulement de liquide dans la rainure.

6. Bande de roulement selon la revendication 4 ou la revendication 5 **caractérisée en ce que** chaque lame flexible (2, 2') comprend un passage (230, 230'), ces deux passages étant complémentaires l'un de l'autre pour former un orifice (3) permettant l'écoulement de l'eau lors d'un roulage sur chaussée revêtue d'eau.

7. Bande de roulement selon la revendication 6 **caractérisée en ce que** la surface totale de l'orifice (3) formé par les passages (230, 230') est au plus égal à 30% de la surface totale de la section de la rainure à l'état neuf dans laquelle est formé le dispositif de fermeture.

8. Bande de roulement selon l'une des revendications 1 à 7 **caractérisée en ce que** l'épaisseur de chaque lame (2, 2') est choisie de manière à maintenir à ladite lame une surface de section constante quelle que soit la position considérée entre la paroi de contact (20) de la lame à l'état neuf et la paroi de liaison (23) avec le fond (13) de la rainure.

## Patentansprüche

1. Lauffläche für Reifen, wobei diese Lauffläche einen Laufstreifen (10) hat, die bestimmt ist, mit einer Straße in Kontakt zu kommen und mindestens eine Rille (1) mit der Breite W und der Tiefe P, begrenzt von zwei gegenüberliegenden Wänden (11, 12), umfasst, wobei diese Wänden miteinander durch einen Rillenboden (13) verbunden sind, wobei dieser Rillenboden dem Teil der Rille entspricht, der die Wände (11, 12) verbindet und sich radial unter dem gesetzlichen Verschleißlimit befindet, wobei mindestens eine Rille (1) mindestens eine Verschlussvorrichtung aufweist, um diese Rille bei ihrer Passage im Kontakt mit einer Straße mindestens teilweise zu verschließen, wobei jede Verschlussvorrichtung mindestens eine flexible Lasche (2, 2') geeigneter Dicke umfasst, um ihre Biegung unter der Wirkung einer Flüssigkeitszirkulation zu erlauben, wobei jede flexible Lasche mit der Dicke E durch eine Kontaktwand (20) begrenzt ist, die bestimmt ist, mit der Straße in Kontakt zu kommen, und von Endwänden (21, 22), die jeweils einer Wand gegenüberliegen, die die Rille begrenzt, und Seitenwänden (25), die voneinander in einem Abstand beabstandet sind, der der Dicke E der Lasche entspricht, wobei dieser Lauffläche **dadurch gekennzeichnet ist, dass** jede Lasche nur auf dem Boden der Rille befestigt ist und dass mindestens ein Durchgang (230, 230'; 3; 201, 202) zwischen dem Boden (13) der Rille und jeder Lasche der Vorrichtung ausgebildet ist, wobei dieser Durchgang (230, 230'; 3; 201, 202) dazu bestimmt ist, ein minimales Wasserfließen bei einem Fahren auf einer mit Wasser bedeckten Straße sicherzustellen und das unabhängig vom Verschleißzustand des Streifens.

2. Lauffläche nach Anspruch 1, **dadurch gekennzeichnet, dass** der zwischen dem Boden (13) der Rille und einer flexiblen Lasche der Verschlussvorrichtung gebildete Durchgang (230, 230'; 3; 201, 202) eine Länge Lp, gemessen in der Richtung der Breite des Querschnitts der Rille (1), hat, wobei diese Länge Lp mindestens gleich 30 % und höchsten gleich 70 % der Länge L1 der Kontaktwand (20) der Lasche in neuem Zustand entspricht.

3. Lauffläche nach Anspruch 1 oder Anspruch 2, **dadurch gekennzeichnet, dass** jede Verschlussvorrichtung eine einzige Lasche (2) umfasst, ausgestattet mit einem Durchgang (201, 202) beiderseits ihrer Verbindungslänge mit dem Boden der Rille.

4. Lauffläche nach Anspruch 1 oder Anspruch 2, **dadurch gekennzeichnet, dass** die Verschlussvorrichtung von mindestens zwei flexiblen Laschen (2, 2') gebildet ist, wobei diese flexiblen Laschen derart aneinander angeordnet sind, dass sie sich an einer ihrer Endwände berühren.

5. Lauffläche nach Anspruch 1 oder Anspruch 2, **dadurch gekennzeichnet, dass** die Verschlussvorrichtung von mindestens zwei flexiblen Laschen (2, 2') gebildet ist, wobei diese flexiblen Laschen in der Hauptrichtung der Rille zueinander versetzt angeordnet sind, wobei diese Richtung der Richtung eines Flüssigkeitsfließens in der Rille entspricht.

6. Lauffläche nach Anspruch 4 oder Anspruch 5, **dadurch gekennzeichnet, dass** jede flexible Lasche (2, 2') einen Durchgang (230, 230') umfasst, wobei diese zwei Durchgänge zueinander komplementär sind, um eine Öffnung (3) zu bilden, die das Fließen von Wasser bei einem Fahren auf einer mit Wasser bedeckten Straße erlaubt.

7. Lauffläche nach Anspruch 6, **dadurch gekennzeichnet, dass** die Gesamtfläche der von den Durchgängen (230, 230') gebildeten Öffnung (3) höchstens 30 % der Gesamtfläche des Querschnitts der Rille in neuem Zustand entspricht, in welcher die Verschlussvorrichtung ausgebildet ist.

8. Lauffläche nach einem der Ansprüche 1 bis 7, **dadurch gekennzeichnet, dass** die Dicke jeder Lasche (2, 2') derart gewählt ist, dass die Lasche unabhängig von der zwischen der Kontaktwand (20) der Lasche in neuem Zustand und der Verbindungswand (23) mit dem Boden (13) der Rille betrachteten Position in einer konstanten Querschnittsfläche verbleibt.

## Claims

1. Tread for a tyre, this tread having a tread surface (10) intended to come into contact with a road surface and comprising at least one groove (1) of width W and of depth P delimited by two walls (11, 12) facing one another, these walls being joined together by a groove bottom (13), this groove bottom corresponding to the part of the groove that connects the walls (11, 12) and is situated radially below the legal tread wear limit, at least one groove (1) comprising at least one closure device for at least partially closing this groove as it passes through the contact with a road surface, each closure device comprising at least one flexible blade (2, 2') of suitable thickness that allows it to flex under the effect of a circulation of liquid, each flexible blade of thickness E being delimited by a contact wall (20) intended to come into contact with the road surface and by end walls (21, 22) each facing a wall delimiting the groove and lateral walls (25) spaced apart by a distance equal to the thickness E of the blade, this tread being **characterized in that** each blade is fixed only to the bottom of the groove and **in that** at least one passage (230, 230'; 3; 201, 202) is formed between the bottom (13) of the groove and each blade of the device, this passage (230, 230'; 3; 201, 202) being intended to ensure a minimal flow of water when driving on a water-covered road surface irrespective of the level of tread wear.

2. Tread according to claim 1, **characterized in that** the passage (230, 230'; 3; 201, 202) formed between the bottom (13) of the groove and a flexible blade of the closure device has a length Lp measured in the direction of the width of the cross section of the groove (1), this length Lp being at least equal to 30% and at most equal to 70% of the length L1 of the contact wall (20) of the blade in the new condition.

3. Tread according to claim 1 or claim 2, **characterized in that** each closure device comprises a single blade (2) provided with a passage (201, 202) on either side of its length for connecting with the bottom of the groove.

4. Tread according to claim 1 or claim 2, **characterized in that** the closure device is formed by at least two flexible blades (2, 2'), these flexible blades being positioned end to end so that they touch via one of their end walls.

5. Tread according to claim 1 or claim 2, **characterized in that** the closure device is formed by at least two flexible blades (2, 2'), these flexible blades being positioned offset from one another in the main direction of the groove, this direction corresponding to the direction in which the liquid flows in the groove.

6. Tread according to claim 4 or claim 5, **characterized in that** each flexible blade (2, 2') comprises a passage (230, 230'), these two passages complementing one another to form an orifice (3) that allows water to flow when driving over a water-covered road surface.

7. Tread according to claim 6, **characterized in that** the total surface area of the orifice (3) formed by the passages (230, 230') is at most equal to 30% of the total surface area of the cross section, in the new condition, of the groove in which the closure device is formed.

8. Tread according to one of claims 1 to 7, **characterized in that** the thickness of each blade (2, 2') is chosen in such a way as to maintain for said blade a surface area of constant cross section whatever the position considered between the contact wall (20) of the blade in the new condition and the connecting wall (23) connecting with the bottom (13) of the groove.
